# EUROPÄISCHE PATENTANMELDUNG

(11) **EP 1 632 401 A1**
(43) Veröffentlichungstag der Anmeldung: **08.03.2006**
(21) Anmeldenummer: 05023378.2
(22) Anmeldetag: 24.11.2000
(51) Int. Cl.: B60R 21/01

(54) **Insassen-Rückhaltesystem**

(30) Priorität: 01.12.1999 DE 19957802
(62) Teilanmeldung aus: 00125268.3
(71) Anmelder: TRW Occupant Restraint Systems GmbH & Co. KG, 73551 Alfdorf (DE)
(72) Erfinder: Claas, Uwe, 73579 Schechingen (DE); Kielwein, Thomas, 73569 Eschach (DE); Lüders, Michael, 75382 Althengstett (DE)
(74) Vertreter: Degwert, Hartmut

(57) **Zusammenfassung**

Der Gurtaufroller (106) des Insassen-Rückhaltesystems enthält ein Rahmen, eine in dem Rahmen drehbar gelagerten Gurtspule, einen Sperrmechanismus zur selektiven Blockierung der Gurtspule und einen fahrzeugsensitiven Sensor. Der Sperrmechanismus wird durch einen Aktor betätigt. Eine elektronische Steuereinheit (10) ist mit einer Eingangsschnittstelle (12) und eine Ausgangsschnittstelle (14) versehen. Der fahrzeugsensitive Sensor ist an die Eingangsschnittstelle (12) und der Aktor an die Ausgangsschnittstelle (14) angeschlossen. Das Insassen-Rückhaltesystem umfaßt mehrere Gurtaufroller (106), die alle denselben mechanischen Grundaufbau, aber bedarfsweise unterschiedliche, durch in der Steuereinheit (10) gespeicherte Programm- und Parameterdaten definierte Funktionalität aufweisen.

## Beschreibung

Die Erfindung betrifft ein Insassen-Rückhaltesystem in Fahrzeugen mit wenigstens einem Gurtaufroller.

Moderne Gurtaufroller sind zusätzlich zu den üblichen gurtband- und/oder fahrzeugsensitiven Sperrfunktionen mit bedarfsweise vorgesehenen Zusatzfunktionen ausgestattet. Eine dieser Zusatzfunktionen ist die Sicherung von Lasten oder Kindersitzen durch einen Blockierzustand, der durch vollständigen Gurtbandabzug und anschließendes Wiederaufrollen des Gurtbandes eingeschaltet wird. Die Rückschaltung in den notfallsperrenden Zustand wird durch vollständiges Aufwickeln vom Gurtband erreicht. Eine andere Zusatzfunktion ist die Gurttrageerkennung, wozu die abgezogene Gurtbandlänge ermittelt wird. Ferner werden Gurtaufroller mit Gurtstraffern kombiniert, die bei einer Fahrzeugkollision die Gurtlose beseitigen.

Derartige Zusatzfunktionen eines Gurtaufrollers erfordern einen hohen Aufwand an mechanischen Bauteilen. Besonders aufwendig ist die Bereitstellung unterschiedlicher Gurtaufrollertypen für die jeweils angeforderten Zusatzfunktionen.

Durch die Erfindung wird ein Insassen-Rückhaltesystem geschaffen, das im Bereich des Gurtaufrollers eine Vielzahl von sicherheits- und komfortrelevanten Zusatzfunktionen mit geringem Aufwand ermöglicht.

Der Gurtaufroller des erfindungsgemäßen Rückhaltesystems enthält einen Rahmen, eine in dem Rahmen drehbar gelagerte Gurtspule, einen Sperrmechanismus zur selektiven Blockierung der Gurtspule und einen elektrischen Drehantrieb für die Gurtspule. Zur Betätigung des Sperrmechanismus ist ein Aktor vorgesehen. Die Funktionen des Gurtaufrollers werden durch eine elektronische Steuereinheit gesteuert, die eine Eingangsschnittstelle und eine Ausgangsschnittstelle aufweist. Ein fahrzeugsensitiver Sensor ist an die Eingangsschnittstelle angeschlossen, und der Aktor ist an die Ausgangsschnittstelle angeschlossen. Mit diesem Grundkonzept sind die Sperrfunktionen und die Spannfunktionen des Gurtaufrollers leicht an die jeweils gestellten Forderungen anzupassen, weil lediglich Programmdaten und Parameterdaten anzupassen sind. Ferner können an die Eingangsschnittstelle der elektronischen Steuereinheit verschiedene Sensoren angeschlossen werden, deren Ausgangssignale bei der Ansteuerung des Sperrmechanismus und des Drehantriebs berücksichtigt werden. Ebenso können an die Ausgangsschnittstelle der elektronischen Steuereinheit weitere Aktoren oder Stellglieder und dergleichen angeschlossen werden, deren Funktionen in Abhängigkeit von den Sensorsignalen gesteuert werden, die über die Eingangsschnittstelle der elektronischen Steuereinheit abgefragt werden. Der Drehantrieb der Gurtspule, insbesondere ein Servomotor, kann nicht nur die Funktion der Aufrollfeder des herkömmlichen mechanischen Gurtaufrollers übernehmen, sondern auch eine Vorstraffung des Gurtbandes bei einem drohenden Fahrzeugaufprall oder eine Gurtbandanspannung in bestimmten Situationen gewährleisten. Insbesondere wird durch die Erfindung ein Insassen-Rückhaltesystem in Fahrzeugen geschaffen, das wenigstens einen Gurtaufroller enthält, der einen Rahmen, eine in dem Rahmen drehbar gelagerte Gurtspule, einen Sperrmechanismus zur selektiven Blockierung der Gurtspule, einen Aktor zur Betätigung des Sperrmechanismus und einen an die Gurtspule gekoppelten elektrischen Drehantrieb aufweist. Eine elektronische Steuereinheit hat eine Eingangsschnittstelle für Sensorsignale und eine Ausgangsschnittstelle mit nachgeschalteten Treibern zur Ansteuerung des Aktors und des elektrischen Drehantriebs.

Die Sensorsignale umfassen:
- Insassenerkennungs-Signale,
- Fahrzeugzustands-Signale,
- Fahrzeugumgebungs-Signale;

Die Sensorsignale in der elektronischen Steuereinheit werden nach einem vorbestimmten Auslöseschema verknüpft zur Ausgabe von Ansteuersignalen an der Ausgangsschnittstelle, durch die selektiv:
- die Gurtspule zum Aufwickeln von Gurtband mit einem gesteuerten Drehmoment beaufschlagt wird;
- die Gurtspule zur Gurtbandanspannung mit einem gesteuerten Drehmoment angetrieben wird;
- die Gurtspule zur Gurtbandstraffung mit einem maximal verfügbaren Drehmoment angetrieben wird;
- der Aktor den Sperrmechanismus betätigt.

Einer der an die Eingangsschnittstelle angeschlossenen Sensoren liefert bei der bevorzugten Ausführungsform ein die Gurtspulendrehung repräsentierendes Inkrementalsignal, vorzugsweise in Kombination mit einem weiteren, die Drehrichtung anzeigenden Signal. Diese Signale werden von der elektronischen Steuereinheit durch aufwärts/abwärts- Zählung ausgewertet, um den absoluten Drehwinkel der Gurtspule und somit die abgezogene Gurtbandlänge zu bestimmen.

Bei dieser bevorzugten Ausführungsform hat der Gurtaufroller die folgende Funktionalität, wobei einzelne Funktionen auch nur bei Bedarf verwirklicht sein können:
- Kinder/Lastensicherung
- Gurttrageerkennung
- Fahrzeugsensitive Sperrung
- Aufrollfeder
- Komfortgetriebe
- Sperrung oder Gurtanspannung bei nichtverrigelter Sitzlehne
- Gurtbandsensitive Sperrung
- Gurtband-Vorstraffung
- Gurtbandanspannung.

Weitere Vorteile und Merkmale der Erfindung ergeben sich aus der folgenden Beschreibung mehrere Ausführungsformen und aus den Zeichnungen, auf die Bezug genommen wird.

### In den Zeichnungen zeigen:

Figur 1 ein Blockdiagramm einer elektronischen Steuereinheit mit daran angeschlossenen Sensoren und Aktoren;
Figur 2 eine Perspektivansicht einer Synchronisationseinrichtung;
Figur 3 eine schematische Darstellung einer anderen Ausführungsform einer Synchronisationseinrichtung;
Figur 4 ein Ablaufdiadramm der Drehwinkelerkennung;
Figur 5 ein Ablaufdiagramm zur Synchronisation des Drehwinkel- Sensors;
Figur 6 ein Blockschema des Insassen-Rückhaltesystems; und
Figur 7 ein Flußdiagramm.

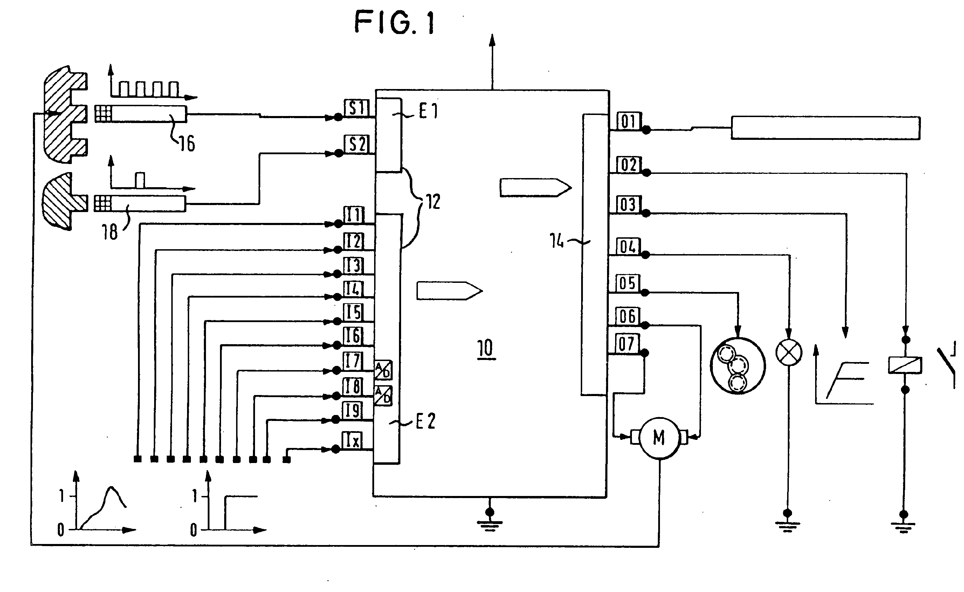

Für die Steuerung der Funktionen des erfindungsgemäßen Gurtaufroller ist eine in Figur 1 dargestellte elektronische Steuereinheit 10 vorgesehen. Diese Steuereinheit 10 ist mit einer Eingangsschnittstelle 12 versehen, die in der gewählten Darstellung in zwei Gruppen E1, E2 unterteilt ist. Diese Unterteilung hat jedoch nur symbolische Bedeutung. Ferner weist die Steuereinheit 10 eine Ausgangsschnittstelle 14 auf.

Die Gruppe E1 der Eingangsschnittstelle 12 enthält zwei Eingänge, die mit S 1 und S2 bezeichnet sind. An den Eingang S 1 ist ein Sensor 16 angeschlossen, der als Inkrementalgeber ausgebildet ist und bei Drehung der Gurtspule des Gurtaufrollers um einen vorbestimmten Drehwinkel einen Impuls abgibt. Die von diesem Sensor 16 abgegebenen Inkrementalsignale sind in bekannter Weise so konfiguriert, daß aus ihrer Aufeinanderfolge auf den Drehsinn der Gurtspule geschlossen werden kann. Beispielsweise besteht der Sensor 16 aus zwei einzelnen Inkrementalgebern, deren Signale zeitlich versetzt abgegeben werden. Der Sensor 16 kann ein optischer Sensor oder auch ein magnetischer Sensor sein.

An den mit S2 bezeichneten Eingang ist ein Sensor 18 angeschlossen, der bei einem bestimmten absoluten Drehwinkel der Gurtspule des Gurtaufrollers ein Synchronisationssignal abgibt. Dieses Synchronisationssignal wird beispielsweise immer dann erzeugt, wenn das Gurtband vollständig von der Gurtspule abgezogen ist. Die Synchronisation erfolgt dann in der Weise, daß ein in der Steuereinheit 10 enthaltener Inkrementalzähler, der durch die Inkrementalsignale des Sensors 16 angesteuert wird, auf Null gesetzt wird, entsprechend dem absoluten Drehwinkel 0° der Gurtspule.

Die Gruppe E2 der Eingangsschnittstelle 12 enthält die Signaleingänge I1 - Ix. Es können sowohl digitale als auch analoge Eingänge vorhanden sein.

An den Eingang I1 wird ein digitales Signal angelegt, das anzeigt, ob die Sitzlehne, an welcher der Gurtaufroller gegebenenfalls montiert ist, verriegelt ist oder nicht.

An den Eingang I2 wird ein digitales Signal angelegt, das anzeigt, ob der zu dem Gurtaufroller gehörende Sitz belegt ist.

An den Eingang I3 wird ein digitales oder auch analoges Signal angelegt, das repräsentativ für das Gewicht des Insassen auf dem zu den Gurtaufroller gehörenden Sitz ist.

An den Eingang I4 wird das vorzugsweise digitale Signal eines fahrzeugsensitiven Sensors angelegt.

An den Eingang I15 wird ein vorzugsweise ebenfalls digitales Signal eines Aufprallsensors angelegt.

An den Eingang I6 wird ein digitales Signal von einem Gurtschloß- Schalter angelegt.

An den Eingang I7 wird ein vorzugsweise analoges Sitzpositions- Signal angelegt.

An den Eingang I8 wird ein vorzugsweise ebenfalls analoges Sitzlehnen-Signal angelegt, das den Neigungswinkel der Sitzlehne angibt.

An den Eingang I9 wird ein digitales Signal von einem externen Sensorschalter angelegt.

Der Eingang Ix steht für weitere zu berücksichtigende Sensorsignale zur Verfügung.

Die Ausgangsschnittstelle 14 enthält die Ausgänge O1 bis O7.

An den Ausgang O1 ist ein Gurtstraffer, beispielsweise mit pyrotechnischem Antrieb, angeschlossen. Es kannn sich um einen Schloßstraffer, Endbeschlagstraffer oder auch um einen am Gurtaufroller angeordneten Rotationsstraffer handeln.

An den Ausgang O2 ist ein Elektromagnet angeschlossen, durch den ein Sperriegel aktivierbar ist. Bei aktiviertem Sperriegel ist die Drehung der Gurtspule im Rahmen lasttragend blockiert.

An den Ausgang O3 ist ein mehrstufiger Kraftbegrenzer angeschlossen. Das am Ausgang O3 ausgegebene Ansteuersignal stellt den Kraftbegrenzer auf das der jeweiligen Situation angemessene Kraftniveau ein.

An den Ausgang O4 ist eine Warneinrichtung angeschlossen, beispielsweise eine Warnlampe.

Von dem Ausgang O5 wird eine Kinder/Lastsicherung angesteuert. Diese bewirkt eine Verriegelung des Gurtaufrollers in Abzugsrichtung, nachdem das Gurtband vollständig abgezogen und wieder aufgerollt wurde; diese Verriegelung wirkt nicht in Aufrollrichtung.

Zwischen den Ausgängen O6 und O7 der Ausgangsschnittstelle 14 ist schließlich ein Elektromotor angeschlossen, der die Gurtspule des Gurtaufrollers antreibt. Wie in Figur 1 angedeutet ist, sind die Sensoren 16 und 18 in diesen Elektomotor integriert und beispielsweise auf einer Schaltungskarte aufgebaut, auf der die verschiedenen Elektronikbauteile einer Motorsteuerung angeordnet sind.

Die Belegung sowohl der Eingänge der Eingangsschnittstelle 12 als auch der Ausgänge der Ausgangsschnittstelle 14 erfolgt nach der von dem Gurtaufroller geforderten Funktionalität. Die Grundfunktionalität eines Gurtaufrollers besteht in der fahrzeugsensitiven Blockierung der Gurtspulendrehung. Für diese Funktion ist nur die Belegung des Eingangs I4 und des Ausgangs O2 erforderlich. Wird hingegen eine Kinder/Lastsicherung gefordert, muß der absolute Drehwinkel der Gurtspule(entsprechend der abgezogenen Gurtbandlänge) ermittelt werden. Dazu werden die Signale an den Eingängen S1 und S2 benötigt. Das Signal am Eingang I1 ist nur erforderlich, wenn der Gurtaufroller an einer umlegbaren Rückenlehne angebaut wird, wobei vorausgesetzt wird, daß die Gurtspule des Gurtaufrollers blockiert bleiben soll, solange die Rückenlehne des Fahrzeugsitzes nicht einwandfrei verrastet ist.

Die Verwendung eines Elektromotors zur Drehung der Gurtspule anstelle der herkömmlichen Aufrollerfeder eröffnet neue Aufrollerfunktionen, insbesondere eine Komfortfunktion, bei der in einem bestimmten Drehwinkelbereich der Gurtspule die Gurtkraft reduziert wird, eine Gurtbandanspannung in bestimmten Situationen, beispielsweise eine OOP-Stellung der Insassen, und eine Vorstraffung des Gurtbandes bei einem drohenden Fahrzeugaufprall oder in einem kritischen Fahrzustand.

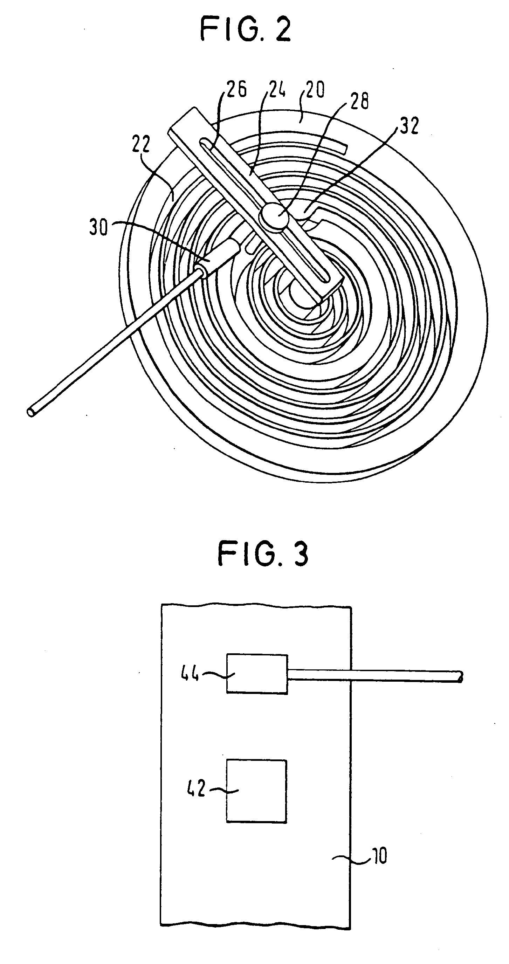

Für die Bestimmung des absoluten Drehwinkels der Gurtspule anhand der Inkrementalsignale des Sensors 16 wird das Synchronisationssignal des Sensors 18 benötigt. Die Figuren 2 und 3 zeigen zwei Ausführungsformen einer Synchronisationseinrichtung, die das Synchronisationssignal erzeugen kann.

Bei der in Figur 2 gezeigten Ausführungsform ist eine Scheibe 20, die eine Spiralnut 22 aufweist, drehfest mit der Gurtspule gekoppelt. In einer am Rahmen des Gurtaufrollers befestigten Führung 24 ist ein radialer Schlitz 26 angeordnet. In diesem radialen Schlitz 26 ist ein stiftförmiger Kurvenfolger 28 geführt, der gleichzeitig indie Spiralnut 22 eingreift. Ein Sensor 30 ist in Gegenüberlage zu dem Kurvenfolger 28 angeordnet, wenn dieser sich in einer bestimmten Radialstellung befindet, die in etwa dem vollständig abgewickelten Gurtband entspricht. Auf entsprechender Höhe weist die Spiralnut 22 eine Unstetigkeit 32 auf, die bei Drehung der Scheibe 20 zu einer verstärkten radialen Bewegungskomponente des Kurvenfolgers 28 führt und auf diese Weise ein ausgeprägtes Synchronisationssignal liefert.

Bei der in Figur 3 gezeigten Ausführungsform ist in das Gurtband 40 ein Permanentmagnet 42 eingewebt, der mit einem am Rahmen des Gurtaufrollers angebrachten Magnetsensor 44 zusammenwirkt. Beim Durchgang des Permanentmagneten 42 über dem Sensor 44 wird das Synchronisationssignal erzeugt.

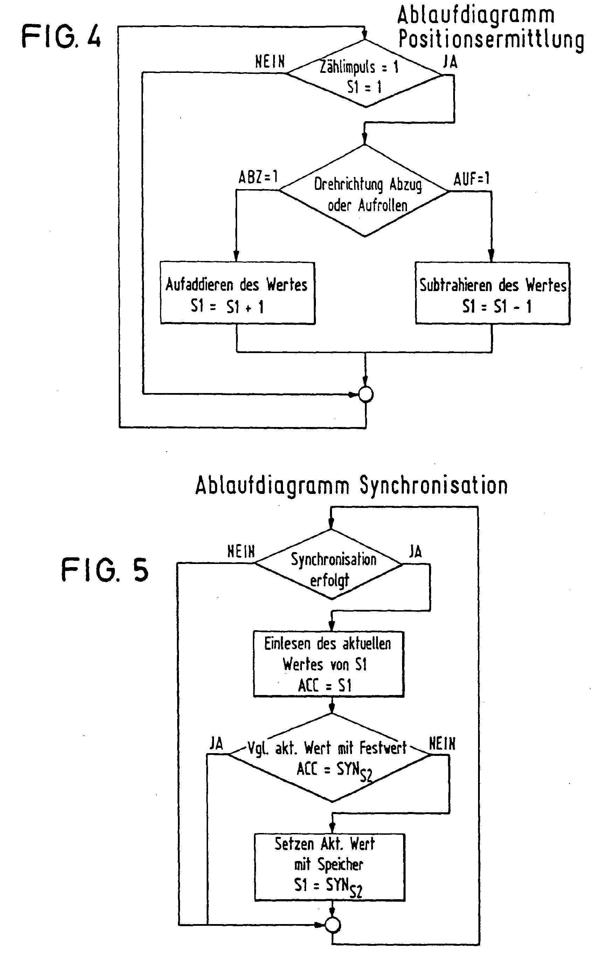

Die in den Figuren 4 und 5 gezeigten Ablaufdiagramme für die Bestimmung des absoluten Drehwinkels der Gurtspule (Figur 4) und zur Synchronisation (Figur 5) sind selbsterklärend.

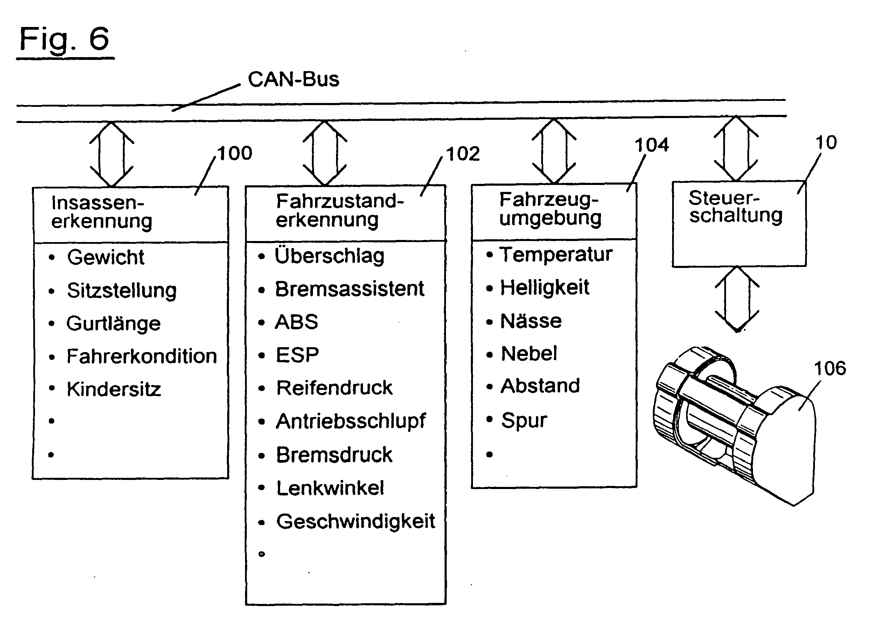

Gemäß dem in Figur 6 gezeigten Blockschaltbild machtdas Insassen-Rückhaltesystem von dem in modernen Fahrzeugen verfügbaren CAN-Bus Gebrauch. Eine Vielzahl von Sensoren ist an diesen Bus angekoppelt. Für die Funktionen des Rückhaltesystems sind drei Gruppen von Sensoren von Bedeutung:
a) In der mit der Bezugszahl 100 bezeichneten Gruppe von Sensoren sind diejenigen zusammengefaßt, mit denen eine Insassen-Erkennung ermöglicht wird. Dazu gehören insbesondere das Gewicht, die Sitzstellung(Längs- und Höhenposition), die ausgezogene Gurtbandlänge, die Fahrerkondition (biometrische Erfassung, insbesondere Einschlafneigung), Vorhandensein eines Kindersitzes.
b) In der mit 102 bezeichneten Gruppe sind Sensoren zusammengefaßt, die der Erkennung des Fahrzustandes dienen. Dazu gehören insbesondere Überschlag (Drehung um die Längsachse), Bremsassistent, ABS, ESP, Reifendruck, Antriebsschlupf, Bremsdruck, Lenkwinkel, Fahrzeuggeschwindigkeit.
c) Die in der mit 104 bezeichneten Gruppe enthaltenen Sensoren dienen der Erkennung der Fahrzeugumgebung. Dazu gehören insbesondere die Außentemperatur, die Helligkeit, Nässe, Nebel, Abstand des Fahrzeugs zu einem Hindernis, Spurverfolgung (Erkennung einer Abweichung von der Fahrspur).

Jede der Gruppen 100, 102, 104 wird bei Bedarf um weitere Sensoren ergänzt.

An den CAN-Bus ist ferner die Steuerschaltung 10 angeschlossen, die ihrerseits den mit 106 bezeichneten Gurtaufroller ansteuert.

Die von den verschiedenen Sensoren abgegebenen Signale werden nach einem im Programmspeicher der Steuerschaltung 10 abgelegten Algorithmus verarbeitet. Die jeweilige Konstellation der Sensorsignale und der zeitliche Ablauf ihres Auftretens entscheiden über die Auslösung einer der folgenden Aktionen:
1) Normaler Aufwickelbetrieb des Gurtaufrollers;
2) Gurtbandanspannung mit erhöhtem Aufrolldrehmoment (leichte Vorstraffung);
3) Gurtband-Vorstraffung mit maximal möglichem Aufroll-Drehmoment.

Davon unabhängig sind die darüber hinausgehenden Notfall- Funktionen, insbesondere die Aktivierung des Sperrmechanismus der Gurtspule, die Auslösung eines pyrotechnischen Gurtbandstraffers und die Aktivierung vo aufblasbaren Rückhalteeinrichtungen. In Abhängigkeit von den erfaßten Sensorsignalen wird darüber hinaus eine Konditionierung der Komponenten des Rückhaltesystems vorgenommen, insbesondere die Einstellung des Kraftniveaus eines Kraftbegrenzers am Gurtaufroller und die Bestimmung der Aktivierungsstufe der aufblasbaren Rückhalteeinrichtungen.

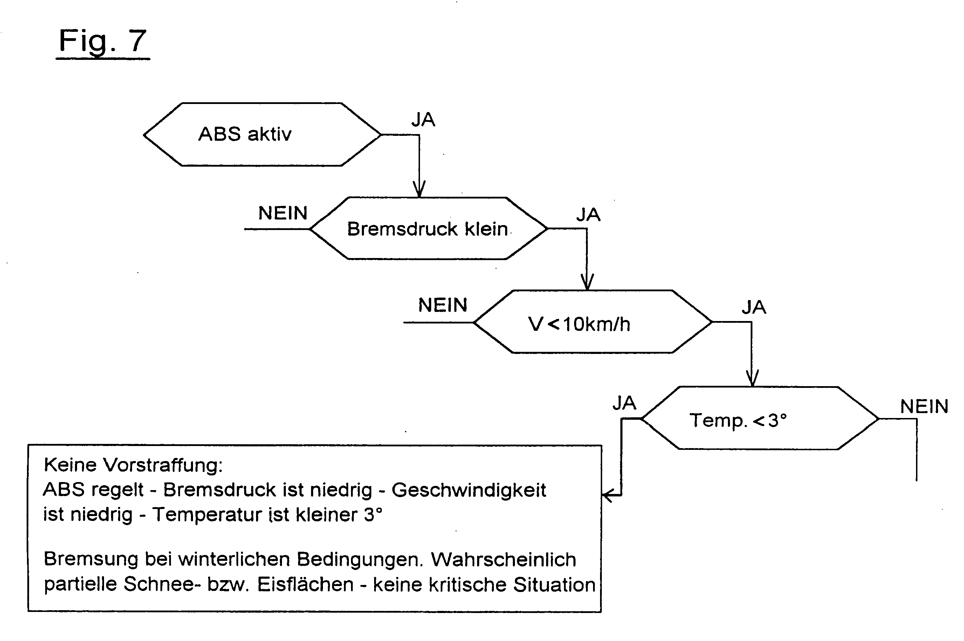

Figur 7 zeigt als Beispiel einen Ausschnitt des Algorithmus, der über die Auslösung der verschiedenen Aktionen entscheidet. Zu beachten ist hier die sequenzielle Abarbeitung von Parameterprüfungen in Abhängigkeit vom Ergebnis vorangegangener Überprüfungen.

In den folgenden Tabellen sind zahlreiche Konstellationen von Sensorsignalen, ihre Bewertung und die daraus folgenden Aktionen aufgelistet. Obwohl diese Tabellen beispielhaften Charakter haben, gehen aus ihnen einige Besonderheiten des erfindungsgemäßen Insassen- Rückhaltesystems hervor. Dazu gehören die Berücksichtigung des Reifendrucks, des Fahrzeugüberschlags (Roll over) und die OOP (Out Of Position)-Situation. Im letzteren Fall wird der betreffende Insasse durch eine nach einiger Zeit erfolgende Anspannung des Gurtbandes sanft und suggestiv angeregt, eine reguläre Sitzposition einzunehmen.

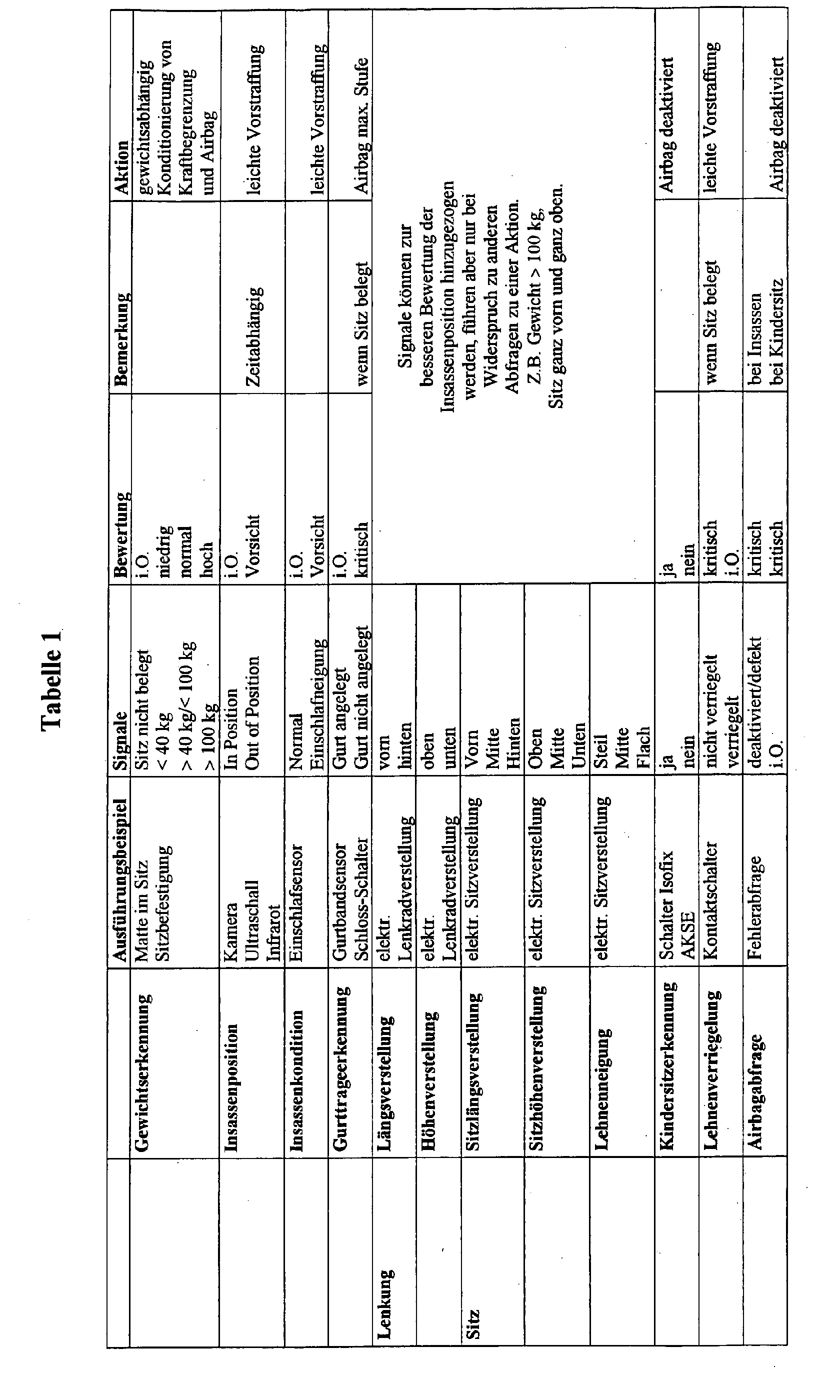

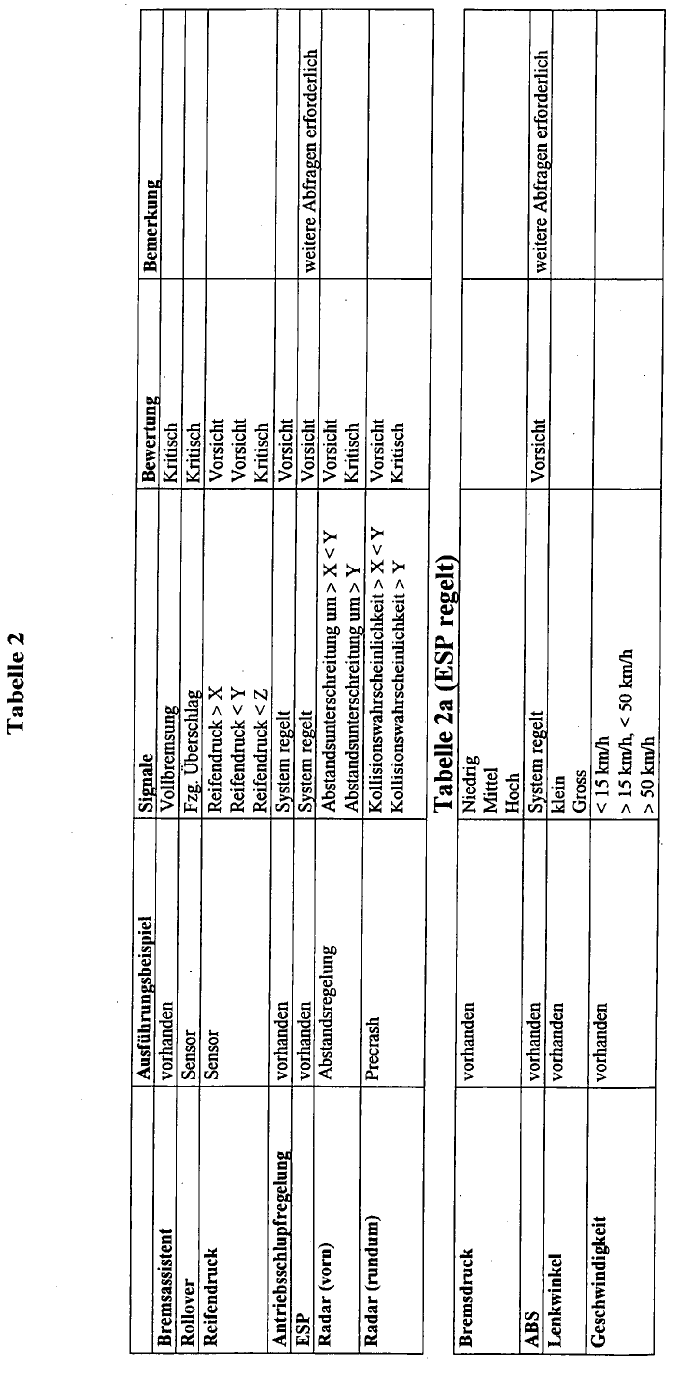

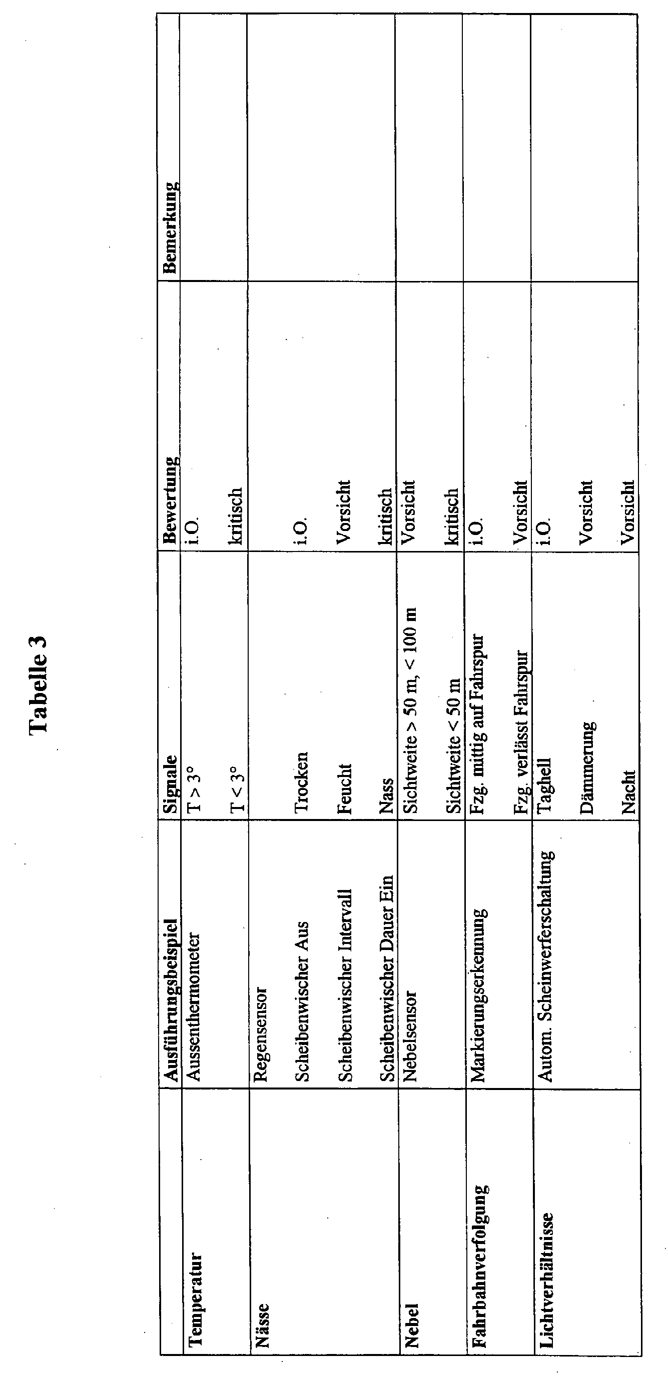

## Patentansprüche

1. Insassen-Rückhaltesystem in Fahrzeugen, mit wenigstens einem Gurtaufroller (106), der einen Rahmen, eine in dem Rahmen drehbar gelagerte Gurtspule, einen Sperrmechanismus zur selektiven Blockierung der Gurtspule, einen Aktor zur Betätigung des Sperrmechanismus und einen an die Gurtspule gekoppelten elektrischen Drehantrieb aufweist, und mit einer elektronischen Steuereinheit (10), die eine Eingangsschnittstelle (12) für Sensorsignale und eine Ausgangsschnittstelle (14) mit nachgeschalteten Treibern zur Ansteuerung des Aktors und des elektrischen Drehantriebs aufweist; wobei die Sensorsignale umfassen:
- Insassenerkennungs-Signale,
- Fahrzeugzustands-Signale,
- Fahrzeugumgebungs-Signale;
und wobei die Sensorsignale in der elektronischen Steuereinheit (10) nach einem vorbestimmten Auslöseschema verknüpft werden zur Ausgabe von Ansteuersignalen an der Ausgangsschnittstelle (14), durch die selektiv:
- die Gurtspule zum Aufwickeln von Gurtband (40) mit einem gesteuerten Drehmoment beaufschlagt wird;
- die Gurtspule zur Gurtbandanspannung mit einem gesteuerten Drehmoment angetrieben wird;
- die Gurtspule zur Gurtbandstraffung mit einem maximal verfügbaren Drehmoment angetrieben wird;
- der Aktor den Sperrmechanismus betätigt;
wobei das Insassen-Rückhaltesystem mehrere Gurtaufroller (106) umfaßt, die alle denselben mechanischen Grundaufbau, aber bedarfsweise unterschiedliche, durch in der Steuereinheit (10) gespeicherte Programm- und Parameterdaten definierte Funktionalität aufweisen.

2. Insassen-Rückhaltesystem nach Anspruch 1, mit einem der Steuereinheit (10) zugeordneten Speichermodul, in dem wenigstens ein Teil der die Funktionalität der Steuereinheit (10) bestimmenden Programmdaten sowie der das Auslöseschema definierenden Parameterdaten gespeichert sind.

3. Insassen-Rückhaltesystem nach Anspruch 1 oder 2, mit einem der Gurtspule zugeordneten Drehwinkel-Inkrementalgeber, der an die Eingangsschnittstelle (12) angeschlossen ist und für jedes Drehwinkel-Inkrement der Gurtspule einen Inkrementalimpuls an die Eingangsschnittstelle (12) abgibt.

4. Insassen-Rückhaltesystem nach Anspruch 3, bei welchem die Inkrementalimpulse eine Information über den Drehsinn der Gurtspule beinhalten und die elektronische Steuereinheit (10) aus dieser Information und den Inkrementalimpulsen den für die abgerollte Gurtbandlänge repräsentativen absoluten Drehwinkel der Gurtspule ermittelt.

5. Insassen-Rückhaltesystem nach Anspruch 3 oder 4, bei dem die Steuereinheit (10) aus einer Folge von Inkrementalimpulsen die Drehbeschleunigung der Gurtspule zur gurtbandsensitiven Ansteuerung des Sperrmechanismus ableitet.

6. Insassen-Rückhaltesystem nach Anspruch 4 oder 5, bei dem die Steuereinheit (10) aus dem absoluten Drehwinkel der Gurtspule Ansteuersignale für den Aktor ableitet, um den Sperrmechanismus für eine Kinder- und Lasten-Sicherungsfunktion nach zumindest annähernd vollständigem Gurtbandabzug von der Gurtspule zu aktivieren, so daß nur noch das Aufrollen von Gurtband möglich ist, und erst nach zumindest annähernd vollständigem Aufrollen des Gurtbandes auf der Gurtspule wieder zu deaktivieren.

7. Insassen-Rückhaltesystem nach Anspruch 4, 5 oder 6, bei dem die Steuereinheit (10) aus dem absoluten Drehwinkel der Gurtspule ein Gurttrage-Erkennungssignal ableitet.

8. Insassen-Rückhaltesystem nach einem der Ansprüche 2 bis 7, bei dem die Abgabe bestimmter Ansteuersignale eine Funktion mehrerer gleichzeitig erfaßter Parameterdaten ist.

9. Insassen-Rückhaltesystem nach einem der Ansprüche 2 bis 7, bei dem die Abgabe bestimmter Ansteuersignale eine Funktion mehrerer gleichzeitig erfüllter und nicht erfüllter Kriterien ist, die durch die Parameterdaten dargestellt werden.

10. Insassen-Rückhaltesystem nach einem der Ansprüche 2 bis 7, bei dem die Abgabe bestimmter Ansteuersignale eine Funktion mehrerer in einer vorbestimmten Sequenz erfaßter Parameterdaten ist.

11. Insassen-Rückhaltesystem nach einem der Ansprüche 2 bis 7, bei dem die Abgabe eines Ansteuersignals bei Erfassung bestimmter Vorrang-Parameterdaten unabhängig von anderen gleichzeitig erfaßten Parameterdaten erzwungen wird.

12. Insassen-Rückhaltesystem nach einem der Ansprüche 2 bis 7, bei dem die Abgabe eines Ansteuersignals bei Erfassung bestimmter Vorrang-Parameterdaten unabhängig von anderen gleichzeitig erfaßten Parameterdaten unterdrückt wird.

13. Insassen-Rückhaltesystem nach einem der Ansprüche 2 bis 12, bei dem die Programmdaten einen Algorithmus definieren, bei dem Parameterprüfungen sequentiell und in Abhängigkeit vom Ergebnis vorangegangener Parameterprüfungen durchgeführt werden.

14. Insassen-Rückhaltesystem nach einem der vorstehenden Ansprüche, mit einem Gurtaufroller (106), der an einer umlegbaren, in aufrechter Stellung durch eine Verriegelungseinrichtung arretierbaren Rückenlehne eines Fahrzeugsitzes angeordnet ist und bei dem an die Eingangsschnittstelle (12) ein Sensor-Schalter angeschlossen ist, der den Zustand der Verriegelungseinrichtung signalisiert, wobei die Steuereinheit (10) ein Aktivierungssignal für den Aktor zur Betätigung des Sperrmechanismus dann abgibt, wenn eine nicht arretierte Rückenlehne signalisiert wird.

15. Insassen-Rückhaltesystem nach einem der vorstehenden Ansprüche, bei dem an der Ausgangsschnittstelle (14) wenigstens ein Indikatorsignal für eine weitere Komponente des Insassen-Rückhaltesystems, insbesondere aufblasbares Schutzkissen oder Kniefänger, verfügbar ist.

16. Insassen-Rückhaltesystem nach einem der Ansprüche 4 bis 15, bei dem die Steuereinheit (10) aus dem absoluten Drehwinkel der Gurtspule ein Indikatorsignal ableitet, das den Gurttragezustand anzeigt.

17. Insassen-Rückhaltesystem nach einem der Ansprüche 4 bis 16, bei dem die Steuereinheit (10) aus dem absoluten Drehwinkel der Gurtspule ein Indikatorsignal ableitet, das einen Zustand der Gefährdung durch eventuelle Aktivierung der weiteren Komponente des Insassen-Rückhaltesystems (OOP-Zustand) anzeigt.

18. Insassen-Rückhaltesystem nach einem der vorstehenden Ansprüche, bei dem die Insassenerkennungs-Signale durch mehrere der folgenden Sensoren (100) erzeugt werden:
- Insassengewicht-Sensor;
- Sitzstellung-Sensor;
- Gurtspulen-Drehwinkel-Sensor;
- Fahrerkonditions-Sensor;
- Kindersitzerkennungs-Sensor.

19. Insassen-Rückhaltesystem nach einem der vorstehenden Ansprüche, bei dem die Fahrzeugzustands-Signale durch mehrere der folgenden Sensoren (102) erzeugt werden:
- Überschlag-Sensor;
- Bremsassistent-Sensor;
- ABS-Sensor;
- ESP-Sensor;
- Reifendruck-Sensor;
- Antriebsschlupf-Sensor;
- Bremsdruck-Sensor;
- Lenkwinkel-Sensor;
- Geschwindigkeits-Sensor;
- Beschleunigungs-Sensor.

20. Insassen-Rückhaltesystem nach einem der vorstehenden Ansprüche, bei dem die Fahrzeugumgebungs-Signale durch mehrere der folgenden Sensoren (104) erzeugt werden:
- Temperatur-Sensor;
- Helligkeits-Sensor;
- Nebel-Sensor;
- Nässe-Sensor;
- Abstands-Sensor;
- Fahrbahnverfolgungs-Sensor.

21. Insassen-Rückhaltesystem nach einem der vorstehenden Ansprüche, bei dem die Gurtspule durch den elektrischen Drehantrieb mit einem gesteuerten Drehmoment zur Gurtanspannung beaufschlagt wird, wenn die erfaßten Insassenerkennungs-Signale eine OOP-Stellung des Insassen anzeigen.

22. Insassen-Rückhaltesystem nach Anspruch 21, bei dem das Drehmoment mit zunehmender Dauer des OOP-Zustands erhöht wird.

23. Insassen-Rückhaltesystem nach Anspruch 21, bei dem das Drehmoment bei andauerndem OOP-Zustand zyklisch erhöht und abgesenkt wird.

24. Insassen-Rückhaltesystem nach einem der vorstehenden Ansprüche, bei dem die Gurtkraft durch plastische Materialverformung eines im Kraftfluß angeordneten Bauteils auf einen variablen Kraftwert begrenzt wird, der durch die erfaßten Insassenerkennungs-Signale bestimmt wird.
